# EUROPÄISCHE PATENTSCHRIFT

(11) **EP 1 055 948 B1**
(45) Veröffentlichungstag und Bekanntmachung des Hinweises auf die Patenterteilung: **11.04.2012**
(21) Anmeldenummer: 00110214.4
(22) Anmeldetag: 17.05.2000
(51) Int. Cl.: G02B 21/24, G12B 5/00

(54) **Vorrichtung zur Feinpositionierung eines Bauteils**
Construction for the fine positioning of a component
Construction pour le positionnement fin d'une pièce

(30) Priorität: 28.05.1999 DE 19924709
(43) Veröffentlichungstag der Anmeldung: 29.11.2000
(73) Patentinhaber: Leica Microsystems CMS GmbH, 35578 Wetzlar (DE)
(72) Erfinder: Engelhardt, Johann, Dr., 76669 Bad Schönborn (DE); Kierschke, Klaus, 69198 Schriesheim (DE)
(74) Vertreter: Naumann, Ulrich

(56) Entgegenhaltungen:
- EP-B1- 0 174 616
- CH-A- 385 508
- DD-A1- 224 415
- DE-A- 19 650 392
- DE-A1- 4 322 694
- DE-B- 1 221 031
- US-A- 2 763 185

## Beschreibung

Die Erfindung betrifft eine Vorrichtung zur Feinpositionierung eines Bauteils, insbesondere zur vertikalen Feinpositionierung eines Objektivs oder eines Objektivrevolvers in der Mikroskopie.

Bei der hier in Rede stehenden Vorrichtung handelt es sich ganz allgemein um eine Vorrichtung zur Feinpositionierung eines Bauteils. Bei diesem Bauteil kann es sich beispielsweise um einen Feinfokussiertisch für Mikroskope handeln. Insbesondere handelt es sich hier um eine Vorrichtung zur vertikalen Feinpositionierung eines Objektivs oder eines Objektivrevolvers, wobei die hier beanspruchte Lehre auf diese besondere Anwendung nicht eingeschränkt ist.

Aus der Praxis ist bereits ein Galvanometer-Hubtisch bekannt, bei dem jedoch eine Kippung statt einer Hubbewegung stattfindet. Solch ein Galvanometer-Hubtisch eignet sich jedenfalls dann nicht zur Positionierung, wenn ein Parallelhub - ohne Kippfehler - erforderlich ist.

Aus der DE 196 50 392 A1 ist ein Feinfokussiertisch bekannt, bei dem das zu hebende bzw. zu senkende Bauteil als Objektplatte ausgeführt ist. Im Konkreten handelt es sich hier um einen Feinfokussiertisch für Mikroskope, der die Realisierung eines Parallelhubs einer Objektplatte bzw. eines Bauteils bereits ermöglicht. Dieser Feinfokussiertisch umfasst einen Montagebereich und einen Verbindungsbereich zur Objektplatte hin, wobei sich zwischen dem Montagebereich und dem Verbindungsbereich über Biegstellen angelenkte Parallelarme erstrecken. Bei diesem Feinfokussiertisch ist aufgrund seiner Merkmalskombination gewährleistet, dass sich der Objekttisch bzw. das Bauteil bei einer Auslenkung nach oben oder nach unten in seiner horizontalen Ausrichtung nicht verändert. Als Antrieb für den Feinfokussiertisch ist ein Galvanometerantrieb vorgesehen, der ein zwischen der Objektplatte und der Drehachse bzw. Drehteil des Galvanometerantriebs wirkendes Seil umfasst.

Will man eine Feinpositionierung des Objektivs bzw. des Objektivrevolvers eines Mikroskops vornehmen, ist aufgrund der optischen Anforderungen eine parallele Hubbewegung zwingend erforderlich. Diese Hubbewegung muss unter Berücksichtigung einer äußerst genauen axialen Relativpositionierung erfolgen, die genauer als 20 nm sein sollte. Mit herkömmlichen Getriebekonstruktionen ist eine solche Genauigkeit nicht erzielbar.

Bei zahlreichen Anwendungen in der Mikroskopie wird an dem zu untersuchenden Objekt direkt gearbeitet. So kann das Objekt beispielsweise durch extern befestigte Mikromanipulatoren während der Betrachtung bearbeitet werden. Eine Fokussierung des Objektträgertisches würde eine unerwünschte Relativbewegung zwischen dem Objekt und den Mikromanipulatoren mit sich bringen, die den apparativen Aufwand ganz erheblich erhöhen würde. Folglich ist es bei solchen Anwendungen von Vorteil, wenn bei feststehendem Objektträgertisch die Fokussierung am Objektiv bzw. am Objektivrevolver erfolgt. Dazu ist eine Feinpositionierung des Objektivs bzw. des Objektivrevolvers mit einer Vorrichtung der eingangs genannten Art erforderlich, und zwar mit der gewünschten Genauigkeit im Hinblick auf die axiale Relativpositionierung der dabei verwendeten Hubeinrichtung.

Aus der EP 0 174 616 B1 ist für sich gesehen ein Einstellmechanismus für ein optisches Instrument bekannt, bei dem ein zu positionierendes Bauteils mit Hilfe eines Antriebskabels positioniert werden kann. Hierbei ist das zu positionierende Bauteil über Kugellagerführung an einem Stativ bewegbar befestigt. Das Stativ weist zwei Rollen auf, über die das elastische Antriebskabel geführt ist.

Aus der DD 224 415 A1 ist eine Vorrichtung zum Anheben eines Objekts an eine Referenzebene bekannt. Diese Vorrichtung weist zwei Antriebe und zwei Hebelanordnungen auf, die ein transparentes Objekt bzw. ein Bauteil bis zu den dort vorgesehenen Endanschlägen anheben können. Die Bewegung der Hubsysteme braucht hierbei nicht synchron zu verlaufen, denn wenn das Bauteil an einen der dort vorgesehenen Anschläge zuerst zur Anlage kommt, dann wird über die zweiseitigen Hebel und deren entsprechenden Hebellager eine Kippbewegung eingeleitet.

Aus der CH 385 508 A ist eine Feinbewegungseinrichtung für mechanisch-optische Geräte, insbesondere für Mikroskope, bekannt. Im Konkreten handelt es sich um eine Vorrichtung zur Feinpositionierung eines Bauteils, mit einem Triebknopf, wobei der Triebknopf direkt auf ein Drehteil wirkt. Das Bauteil ist mit dem Drehteil durch ein Seil bzw. Band verbunden. Die Verbindung ist im Sinne einer Aufhängung für das Bauteil ausgebildet, wobei mit Drehung des Drehteils durch Abrollen des Seils oder Bands auf dem Drehteil die Position des Bauteils veränderbar ist. Eine Hubbewegung des Bauteils wird so hervorgerufen.

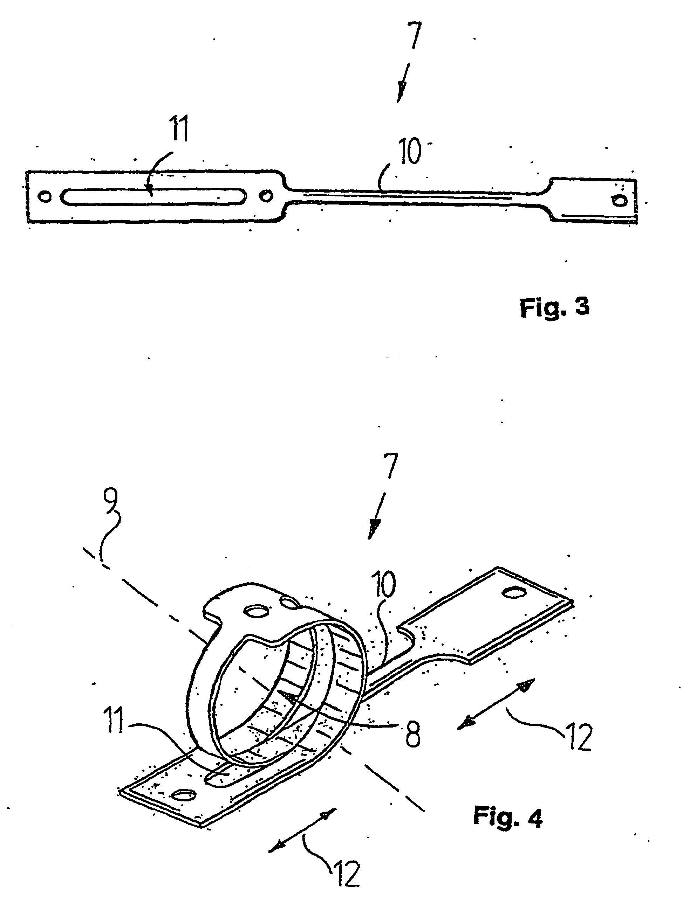

Aus der DE 43 22 694 A1 ist für sich gesehen ein optisches Instrument mit einer Scannereinrichtung bekannt, bei dem ein Bewegungsuntersetzer gemäß den Fig. 3, 4A und 4B ein elastisches Band umfasst, welches die Drehbewegung einer Welle auf einen Scanner mit geringem Spiel überträgt.

Der vorliegenden Erfindung liegt nun die Aufgabe zugrunde, eine Vorrichtung zur Feinpositionierung eines Bauteils, insbesondere zur vertikalen Feinpositionierung eines Objektivs oder eines Objektivrevolvers in der Mikroskopie, derart auszugestalten und weiterzubilden, dass eine kippfreie Hubbewegung des zu positionierenden Bauteils mit einfachen Mitteln möglich ist.

Die Aufgabe wird durch die Vorrichtung gemäß Patentanspruch 1 gelöst.

Erfindungsgemäß ist erkannt worden, dass sich eine kippfreie Hubbewegung eines zu positionierenden Bauteils dadurch erreichen lässt, dass neben der Hebelanordnung und dem Antrieb für die Hebelanordnung Drehteile vorgesehen sind, welche unmittelbar über die Hebelanordnung drehangetrieben sind. Mit anderen Worten sind Hebel derart an den Drehteilen angelenkt, dass ein Kippen der Hebel ein Drehen des Drehteils verursacht. Das zu positionierende Bauteil ist wiederum mit den Drehteilen verbunden, wobei diese Verbindung nicht etwa starr, sondern flexibel ausgelegt ist. Die Verbindung zwischen dem Bauteil und den Drehteilen wirkt im Sinne einer ganz besonderen Aufhängung für das Bauteil, wobei mit Drehung der Drehteile die Position des Bauteils durch Abrollen der flexiblen Verbindung auf den Drehteilen - je nach Drehrichtung - relativ verändert wird. Aufgrund dieser Veränderung der Position zwischen den Drehteilen und dem Bauteil und aufgrund der Aufhängung des Bauteils führt eine Veränderung der Position zu einer unmittelbaren Hubbewegung des Bauteils, und zwar spielfrei und weitestgehend ohne Reibung.

Nun ist es grundsätzlich möglich, die voranstehend genannten Merkmale in Ergänzung zu einer herkömmlichen Führung zu realisieren. Anstelle einer herkömmlichen Führung kann das Bauteil ausschließlich mittels der flexiblen Verbindung aufgehängt sein, so dass eine weiterreichende Führung nicht erforderlich ist.

In ganz besonders vorteilhafter Weise ist die Verbindung zwischen dem Drehteil und dem Bauteil als vorzugsweise flexibler, zumindest teilweise um das Drehteil gewickelter und mit einem freien Ende mit dem Bauteil fest verbundener Streifen ausgeführt. Letztendlich kann es sich hier um einen federflexiblen Streifen handeln, der einerseits als Aufhängung für das Bauteil und andererseits zur Realisierung des Feinhubs bzw. der Feinpositionierung dient. Mit Drehung des Drehteils verändert sich die Position des Drehteils relativ zum Bauteil, wodurch das Bauteil in seiner vertikalen Position relativ zum Drehteil bzw. zu einem Rahmen oder Gehäuse gesenkt oder angehoben wird.

Im Konkreten erstreckt sich der Streifen im Sinne einer Schleife um das Drehteil, wobei sich bei Drehung des Drehteils die Position der Schleife über die Länge des Streifens hinweg verlagert, so dass sich die Position zwischen der Schleife bzw. dem Drehteil und dem Bauteil je nach Drehrichtung des Drehteils verändert. Im Rahmen einer solchen Ausgestaltung wird der Streifen nicht etwa auf das Drehteil aufgewickelt, sondern wird vielmehr die Position der Schleife verändert, wodurch sich bei Realisierung der voranstehend genannten Anordnung ein Hub des Bauteils ergibt.

Die hier in Rede stehende, sich um das Drehteil erstreckende Schleife des Streifens wird in vorteilhafter Weise dadurch gebildet, dass sich ein verjüngter Bereich des Streifens durch eine langgestreckte Ausnehmung des Streifens hindurch erstreckt, wobei die Schleife durch Drehung des Drehteils entlang der Ausnehmung verlagerbar ist. Ein Schlupf zwischen dem Streifen bzw. dessen Schleife und dem Drehteil ist weitgehend zu vermeiden. Dazu könnte der Streifen zumindest punktuell an dem Drehteil befestigt sein. Eine Haftung zwischen dem Streifen und dem Drehteil durch einen erhöhten Reibungskoeffizienten ist hinreichend.

Die hier realisierte Aufhängung könnte dadurch modifiziert sein, dass der Streifen in jeder Position des Bauteils zwischen dem Bauteil und dem Drehteil federnd vorgespannt ist. Dadurch lässt sich eine hohe Stabilität in der Position des Bauteils erzielen. Der Streifen selbst könnte aus Kunststoff oder aus Federstahl gefertigt sein. Federstahl bietet sich ganz besonders zur Verwendung an.

In weiter vorteilhafter Weise ist das Bauteil innerhalb eines Rahmens oder gar innerhalb eines Gehäuses angeordnet, wobei aufgrund der voranstehend erörterten Merkmale eine geringe Bauhöhe realisierbar ist. Das Drehteil bzw. die Drehteile würden sich dann entsprechend zwischen einander gegenüberliegenden Rahmenschenkeln oder Wandungen erstrecken. Die Drehteile sind in weiter vorteilhafter Weise in den Rahmenschenkeln bzw. Wandungen drehgelagert. Das Drehteil könnte dabei innerhalb des Rahmens bzw. des Gehäuses über die Hebelanordnung drehangetrieben sein.

Der Betätigungshebel dient zur Verbindung der Stellhebel und somit der Drehteile mit dem Antrieb. Dazu ist der Betätigungshebel mit seinem dem Stellhebel abgewandten Ende entlang einer drehangetriebenen Spindel verstellbar, so dass ein Kippen des Betätigungshebels ein Kippen der Stellhebel und dies wiederum ein Drehen des Drehteils bzw. der Drehteile zur Folge hat. Der Betätigungshebel ist mit einem auf der Spindel laufenden Stellteil ebenfalls flexibel verbunden, nämlich durch ein flexibles bandförmiges Element. Auch insoweit ist ein Kippen des Betätigungshebels relativ zu dem Drehteil und somit relativ zu der Spindel möglich. Die Spindel selbst wird über einen Elektromotor angetrieben, der wiederum flexibel bzw. elastisch aufgehängt sein kann. Dies hat den Vorteil, dass eine laterale Abweichung der Motorachse bzw. der Spindel, z.B. in Form einer Unwucht, durch die flexible Motoraufhängung kompensiert wird, so dass diese Störung nicht auf die Hebelanordnung und schon gar nicht auf die Drehteile bzw. auf das Bauteil übertragen wird.

Durch eine hohe Untersetzung des Motors, z.B. 2000 Schritte pro Umdrehung in Verbindung mit einer kleinen Spindelsteigung und unter Zugrundelegung entsprechend ausgelegter Hebelarme einerseits des Betätigungshebels und andererseits der Stellhebel, wird eine hohe Auflösung der Positioniergenauigkeit des Bauteils über einen großen Verfahrweg hinweg erzielt, nämlich beispielsweise kleiner gleich 20 nm relativ.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Seitenansicht ein Ausführungsbeispiel einer erfindungsgemäßen Vorrichtung zur Feinfokussierung eines schematisch dargestellten Bauteils,
- Fig. 2: den Gegenstand aus Fig. 1 in einer schematischen Draufsicht,
- Fig. 3: ein Ausführungsbeispiel eines zur elastischen Verbindung dienenden Streifens im abgerollten Zustand und
- Fig. 4: den Gegenstand aus Fig. 3 im Betriebszustand, d.h. unter Bildung einer Schleife zur Aufnahme des Drehteils.

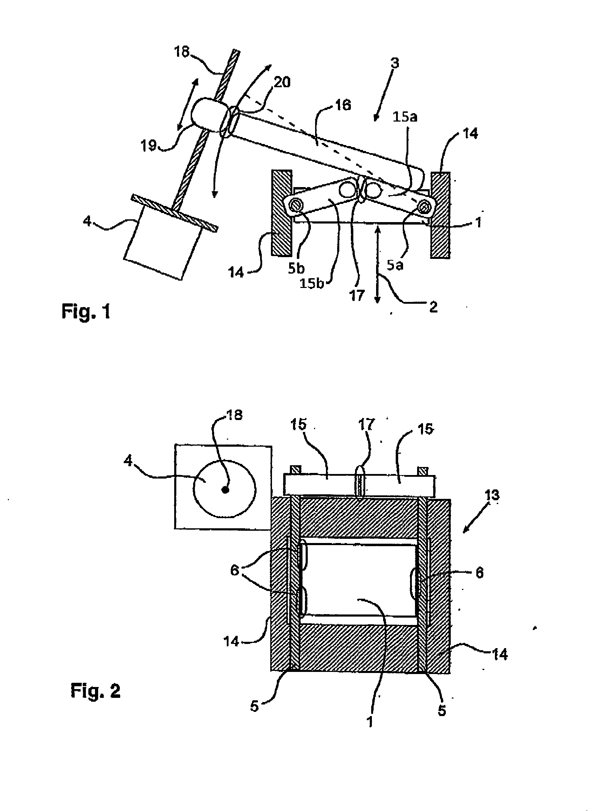

Die Figuren 1 und 2 zeigen gemeinsam eine Vorrichtung zur Feinpositionierung eines Bauteils 1, wobei das Bauteil 1 lediglich schematisch dargestellt ist. Dabei kann es sich beispielsweise um ein Objektiv bzw. um einen Objektivrevolver eines Mikroskops handeln. Das Bauteil 1 ist vertikal positionierbar, nämlich in z-Richtung, die mit Bezugszeichen 2 gekennzeichnet ist. Die Vorrichtung umfasst eine Hebelanordnung 3 und einen Antrieb 4 für die Hebelanordnung 3.

Die Hebelanordnung 3 wirkt unmittelbar auf Drehteile 5a, b wobei das Bauteil 1 flexibel, mit den Drehteilen 5a, b verbunden ist. Diese flexible Verbindung 6 ist im Sinne einer mit Drehung der Drehteile 5a, b die Position des Bauteils 1 durch Abrollen der flexiblen Verbindung 6 auf den Drehteilen 5a, b verändernde und dabei eine Hubbewegung des Bauteils 1 hervorrufende Aufhängung für das Bauteil 1 ausgebildet.

Bei der flexiblen Verbindung 6 handelt es sich im Konkreten um einen um die Drehteile 5a, b gewickelten und mit einem freien Ende mit dem Bauteil 1 fest verbundenen, flexiblen Streifen 7, wie er beispielhaft in den Fig. 3 und 4 gezeigt ist. Dieser Streifen 7 erstreckt sich im Sinne einer Schleife 8 um das Drehteil 5a, b, so dass sich bei Drehung des Drehteils5a, b die Position der Schleife 8 über die Länge des Streifens 7 hinweg verlagert, so dass sich die Position zwischen der Schleife 8 bzw. dem Drehteil 5a, 5b und dem Bauteil 1 je nach Drehrichtung des Drehteils 5a, b verändert. Bei ortsfester Drehachse 9 des Drehteils 5a, b wird das Bauteil 1 in Richtung 2 nach oben oder nach unten bewegt. Dadurch definiert sich eine Hubbewegung des Bauteils 1.

Die Fig. 3 und 4 zeigen besonders deutlich, dass die sich um das Drehteil 5a, b erstreckende Schleife 8 dadurch gebildet ist, dass sich ein verjüngter Bereich 10 des Streifens 7 durch eine langgestreckte Ausnehmung 11 des Streifens 7 hindurch erstreckt, wobei die Schleife 8 entlang der Ausnehmung 11 verlagerbar ist. In Fig. 4 ist durch die Pfeile 12 angedeutet, dass sich bei ortsfester Drehachse 9 des Drehteils 5a, b die Bereiche des Streifens 7 vor und hinter der Schleife 8 verlagern, wodurch die Hubbewegung letztendlich realisiert wird. Bei dem hier gewählten Ausführungsbeispiel ist der Streifen 7 aus Metall gefertigt.

Hinsichtlich einer konkreten Ausgestaltung der erfindungsgemäßen Vorrichtung zeigen die Fig. 1 und 2 deutlich, dass das Bauteil 1 auf einer Seite über zwei, auf der anderen Seite lediglich über eine flexible Verbindung 6 bzw. Streifen 7 mit dem Drehteil 5a, b verbunden ist. Ein Kippfehler ist insoweit wirksam vermieden.

Das Drehteil 5a, b ist als eine sich parallel zu dem Bauteil 1 erstreckende Welle ausgeführt, wobei beidseits des Bauteils 1 jeweils ein Drehteil 5a oder b angeordnet ist.

Die Fig. 1 und 2 lassen des Weiteren erkennen, dass das Bauteil 1 innerhalb eines Rahmens 13 angeordnet ist. Die Drehteile 5a, b erstrecken sich zwischen zwei gegenüberliegenden Rahmenschenkeln 14, wobei die Drehteile 5a, b in den Rahmenschenkeln 14 gelagert sind.

Fig. 2 zeigt besonders deutlich, dass sich die beiden Drehteile 5a, b auf einer Seite durch den Rahmenschenkel 14 nach außen erstrecken. Außerhalb des Rahmens 13 greift die Hebelanordnung 3 an den Drehteilen 5a, b an, nämlich jeweils mit einem Stellhebel 15, wobei einer der beiden Stellhebel 15 zum Drehantrieb eines der beiden Drehteile 5a, b mit einem Betätigungshebel 16 fest verbunden ist. Dieser Betätigungshebel 16 ist wiederum über den Antrieb 4 kippbar.

Die Figuren zeigen des Weiteren, dass mit jedem der beiden Drehteile 5a, b ein Stellhebel 15 fest verbunden ist. Die beiden Stellhebel 15 sind an dem dem Drehteil 5a, b abgewandten Ende miteinander flexibel verbunden, wobei es sich bei dieser elastischen Verbindung 17 wiederum um einen Streifen 7 mit den Merkmalen der elastischen Verbindung 6 zwischen dem Bauteil 1 und dem Drehteil 5a, b handelt.

Fig. 1 lässt des Weiteren erkennen, dass der Betätigungshebel 16 mit seinem dem Stellhebel 15 abgewandten Ende entlang einer drehangetriebenen Spindel 18 verstellbar ist, wobei der Betätigungshebel 16 dazu mit einem auf der Spindel 18 laufenden Stellteil 19 elastisch verbunden ist. Bei dieser elastischen Verbindung 20 kann es sich wiederum um einen Streifen 7 mit den Merkmalen der elastischen Verbindung 6 zwischen dem Bauteil 1 und dem Drehteil 5 handeln. Hinsichtlich weiterer Merkmale, die den Figuren nicht entnehmbar sind, wird zur Vermeidung von Wiederholungen auf den allgemeinen Teil der Beschreibung verwiesen.

## Patentansprüche

1. Vorrichtung zur Feinpositionierung eines Bauteils (1), insbesondere zur vertikalen Feinpositionierung eines Objektivs oder eines Objektivrevolvers in der Mikroskopie, mit einem Antrieb (4), einem durch den Antrieb (4) kippbaren Betätigungshebel (16), einem mit dem Betätigungshebel (16) fest verbundenen ersten Stellhebel (15a), einem mit dem ersten Stellhebel (15a) flexibel verbundenen zweiten Stellhebel (15b) und zwei mit jeweils einem der Stellhebel fest verbundenen, durch die Kippbewegung der Stellhebel (15a, 15b) drehbaren Drehteilen (5a, 5b),
wobei beidseits des Bauteils (1) jeweils eines der Drehteile (5a, 5b) angeordnet ist.
wobei das Bauteil (1)jeweils über mindestens ein flexibles bandförmiges Element (6) mit dem jeweiligen Drehteil (5a, 5b) verbunden ist,
wobei die Verbindung im Sinne einer mit Drehung der Drehteile (5a, 5b) die Position des Bauteils (1) durch Abrollen der Elemente (6) auf den Drehteilen (5a, 5b) verändernden und dabei eine Hubbewegung (3) des Bauteils (1) hervorrufenden Aufhängung für das Bauteil (1) wirkt und
wobei die Stellhebel (15a, 15b) an dem dem jeweiligen Drehteil (5a, 5b) abgewandten Ende über eine flexible Verbindung (17) zur Synchronisation der Drehbewegung der Drehteile miteinander verbunden sind.

2. Vorrichtung nach Anspruch 1, **dadurch gekennzeichnet, dass** das Element (6) als zumindest teilweise um das Drehteil (5a, b) gewickelter und mit einem freien Ende mit dem Bauteil (1) fest verbundener Streifen (7) ausgeführt ist.

3. Vorrichtung nach Anspruch 2, **dadurch gekennzeichnet, dass** sich der Streifen (7) im Sinne einer Schleife (8) um das Drehteil (5a, b) erstreckt und dass sich bei Drehung des Drehteils (5a, b) die Position der Schleife (8) über die Länge des Streifens (7) hinweg verlagert, so dass sich die Position der Schleife (8) bzw. dem Drehteil (5a, b) und dem Bauteil (1) je nach Drehrichtung des Drehteils (5a, b) verändert.

4. Vorrichtung nach Anspruch 3, **dadurch gekennzeichnet, dass** die sich um das Drehteil (5a, b) erstreckende Schleife (8) **dadurch** gebildet ist, dass sich ein verjüngter Bereich (10) des Streifens (7) durch eine langgestreckte Ausnehmung (11) des Streifens (7) hindurch erstreckt, wobei die Schleife (8) entlang der Ausnehmung (11) verlagerbar ist.

5. Vorrichtung nach einem der Ansprüche 2 bis 4, **dadurch gekennzeichnet, dass** der Streifen (7) in jeder Position des Bauteils (1) zwischen dem Bauteil (1) und dem Drehteil (5a, b) federnd vorgespannt ist.

6. Vorrichtung nach einem der Ansprüche 2 bis 5, **dadurch gekennzeichnet, dass** der Streifen (7) aus Kunststoff gefertigt ist.

7. Vorrichtung nach einem der Ansprüche 2 bis 5, **dadurch gekennzeichnet, dass** der Streifen (7) aus Metall gefertigt ist.

8. Vorrichtung nach einem der Ansprüche 1 bis 7, **dadurch gekennzeichnet, dass** das Bauteil (1) innerhalb eines Rahmens (13) oder eines Gehäuses angeordnet ist.

9. Vorrichtung nach Anspruch 8, **dadurch gekennzeichnet, dass** sich die Drehteile (5a, b) zwischen zwei einander gegenüberliegenden Rahmenschenkeln (14) erstrecken.

10. Vorrichtung nach Anspruch 9, **dadurch gekennzeichnet, dass** die Drehteile (5a, b) in den Rahmenschenkeln (14) bzw. Wandungen gelagert sind.

11. Vorrichtung nach Anspruch 9 oder 10, **dadurch gekennzeichnet, dass** sich die Drehteile (5a, b) zumindest durch einen der Rahmenschenkel (14) bzw. durch eine der Wandungen hindurch nach außen erstrecken.

12. Vorrichtung nach Anspruch 11, **dadurch gekennzeichnet, dass** die Stellhebel (15a, 15b) an den sich nach außen erstreckenden Teilen der Drehteile (5a, b) angelenkt sind.

13. Vorrichtung nach einem der Ansprüche 1 bis 12, **dadurch gekennzeichnet, dass** die Verbindung zwischen den Steilhebeln (15a, 15b) aus dem flexiblen bandförmigen Element (6) besteht.

14. Vorrichtung nach einem der Ansprüche 1 bis 13, **dadurch gekennzeichnet, dass** der Betätigungshebel (16) mit seinem dem ersten Stellhebel (15a) abgewandten Ende entlang einer drehangetriebenen Spindel (18) verstellbar ist.

15. Vorrichtung nach Anspruch 14, **dadurch gekennzeichnet, dass** der Betätigungshebel (16) mit einem auf der Spindel (18) auflaufenden Stellteil (19) flexibel verbunden ist.

16. Vorrichtung nach Anspruch 15, **dadurch gekennzeichnet, dass** die flexible Verbindung zwischen dem Betätigungshebel (16) und dem Stellteil (19) aus dem flexiblen bandförmigen Element (6) besteht.

## Claims

1. A device for fine positioning of a component (1), in particular for vertical fine positioning of an objective or an objective revolver in microscopy, comprising a drive means (4), an operating lever (16) tiltable by the drive means (4), a first adjusting lever (15a) rigidly connected to the operating lever (16), a second adjusting lever (15b) flexibly connected to the first adjusting lever (15a) and two rotating parts (5a, 5b) rigidly connected to a respective one of the adjusting levers and rotatable by the tilting movement of the adjusting levers (15a, 15b),
wherein the rotating parts (5a, 5b) are arranged one at each side of the component (1),
wherein the component (1) is connected to each rotating part (5a, 5b) via at least one flexible strip-form element (6),
wherein the connection acts as a mounting for the component (1) changing the position of the component (1) when the element (6) is rolled on the rotating parts (5a, 5b) as the rotating parts (5a, 5b) rotate, and in so doing producing a lifting movement (3) of the component (1), and
wherein, in order to synchronise the rotary movement of the rotating parts, at the end remote from the respective rotating part (5a, 5b) the adjusting levers (15a, 15b) are connected to each other via a flexible connection (17).

2. A device according to claim 1, **characterised in that** the element (6) is in the form of a strip (7) at least partially wound around the rotating part (5a, b) and rigidly connected by a free end to the component (1).

3. A device according to claim 2, **characterised in that** the strip (7) extends in the form of a loop (8) around said rotating part (5a, b) and on rotation of the rotating part (5a, b) the position of the loop (8) shifts along the length of the strip (7) so that the position between the loop (8) or the rotating part (5a, b) and the component (1) changes depending on the direction of rotation of the rotating part (5a, b).

4. A device according to claim 3, **characterised in that** the loop (8) extending around the rotating part (5a, b) is formed by a narrowed region (10) of the strip (7) extending through an elongated opening (11) in the strip (7), wherein the loop (8) can be moved along the opening (11).

5. A device according to any one of claims 2 to 4, **characterised in that** the strip (7) is resiliently preloaded in any position of the component (1) between the component (1) and the rotating part (5a, 5b).

6. A device according to any one of claims 2 to 5, **characterised in that** the strip (7) is made of plastics material.

7. A device according to any one of claims 2 to 5, **characterised in that** the strip (7) is made of metal.

8. A device according to any one of claims 1 to 7 **characterised in that** the component (1) is arranged within a frame (13) or a housing.

9. A device according to claim 8, **characterised in that** the rotating parts (5a, b) extend between two opposite frame sides (14).

10. A device according to claim 9, **characterised in that** the rotating parts (5a, b) are mounted in bearings in the frame sides (14) or walls.

11. A device according to claim 9 or 10, **characterised in that** the rotating parts (5a, b) extend to the outside through at least one of the frame sides (14) or through at least one of the walls.

12. A device according to claim 11, **characterised in that** the adjusting levers (15a, 15b) are articulated at the outwardly extending parts of the rotating parts (5a, b).

13. A device according to any one of claims 1 to 12, **characterised in that** the connection between the adjusting levers (15a, 15b) comprises the flexible strip-form element (6).

14. A device according to any one of claims 1 to 13, **characterised in that** the operating lever (16) is movable with the end thereof remote from the first adjusting lever (15a) along a spindle (18) driven in rotation.

15. A device according to claim 14, **characterised in that** the operating lever (16) is flexibly connected to an adjusting part (19) running on the spindle (18).

16. A device according to claim 15, **characterised in that** the flexible connection between the operating lever (16) and the adjusting part (19) comprises the flexible strip-form element (6).

## Revendications

1. Dispositif pour le positionnement précis d'un composant (1), en particulier pour le positionnement vertical précis d'un objectif ou d'une tourelle d'objectifs dans le domaine de la microscopie, comprenant un dispositif d'entraînement (4), un levier de commande (16) que le dispositif d'entraînement (4) peut faire basculer, un premier levier de réglage (15a) relié solidement au levier de commande (16), un deuxième levier de réglage (15b) relié de manière flexible au premier levier de réglage (15a), et deux éléments rotatifs (5a, 5b) respectivement reliés solidement a l'un des leviers de réglage et pouvant être amenés à tourner par le basculement des leviers de réglage (15a, 15b),
dans lequel, respectivement l'un des éléments rotatifs (5a, 5b) est disposé des deux côtés du composant (1),
dans lequel le composant (1) est relié à l'élément rotatif (5a, 5b) respectif par respectivement au moins un élément (6) flexible en forme de bande,
dans lequel la connexion agit à la manière d'une suspension pour le composant (1) et qui change la position du composant (1) par une rotation des éléments rotatifs (5a, 5b) en ce que les éléments (6) roulent sur les éléments rotatifs (5a, 5b) tout en provoquant un mouvement de levage (3) du composant (1), et
dans lequel les leviers de réglage (15a, 15b) sont reliés ensemble à l'extrémité détournée de l'élément rotatif (5a, 5b) respectif par l'intermédiaire d'une connexion flexible (17) pour synchroniser le mouvement rotatif des éléments rotatifs.

2. Dispositif selon la revendication 1, **caractérisé en ce que** l'élément (6) est réalisé comme un ruban (7) enroulé au moins en partie autour de l'élément rotatif (5a, b) et relié solidement au composant (1) par une extrémité libre.

3. Dispositif selon la revendication 2, **caractérisé en ce que** le ruban (7) s'étend autour de l'élément rotatif (5a, b) à la manière d'une boucle (8), et **en ce qu'**en cas de rotation de l'élément rotatif (5a, b), la position de la boucle (8) se décale sur la longueur du ruban (7) de sorte que la position de la boucle (8) ou de l'élément rotatif (5a, b) et du composant (1) change en fonction du sens de rotation de l'élément rotatif (5a, b).

4. Dispositif selon la revendication 3, **caractérisé en ce que** la boucle (8) s'étendant autour de l'élément rotatif (5a, b) est formée **en ce qu'**une zone effilée (10) du ruban (7) s'étend à travers un évidement allongé (11) du ruban (7), la boucle (8) pouvant se décaler le long de l'évidement (11).

5. Dispositif selon l'une quelconque des revendications 2 à 4, **caractérisé en ce que** le ruban (7) est précontraint de manière élastique dans chaque position du composant (1) entre le composant (1) et l'élément rotatif (5a, b).

6. Dispositif selon l'une quelconque des revendications 2 à 5, **caractérisé en ce que** le ruban (7) est réalisé en matière plastique.

7. Dispositif selon l'une quelconque des revendications 2 à 5, **caractérisé en ce que** le ruban (7) est réalisé en métal.

8. Dispositif selon l'une quelconque des revendications 1 à 7, **caractérisé en ce que** le composant (1) est disposé à l'intérieur d'un cadre (13) ou d'un boîtier.

9. Dispositif selon la revendication 8, **caractérisé en ce que** les éléments rotatifs (5a, b) s'étendent entre deux branches de cadre (14) mutuellement opposées.

10. Dispositif selon la revendication 9, **caractérisé en ce que** les éléments rotatifs (5a, b) sont montées dans les branches de cadre (14) ou les parois.

11. Dispositif selon la revendication 9 ou 10, **caractérisé en ce que** les éléments rotatifs (5a, b) s'étendent au moins à travers l'une des branches de cadre (14) ou à travers l'une des parois vers l'extérieur.

12. Dispositif selon la revendication 11, **caractérisé en ce que** les leviers de réglage (15a, 15b) sont articulés sur les parties s'étendant vers l'extérieur des éléments rotatifs (5a, b).

13. Dispositif selon l'une quelconque des revendications 1 à 12, **caractérisé en ce que** la connexion entre les leviers de réglage (15a, 15b) se compose de l'élément flexible (6) en forme de bande.

14. Dispositif selon l'une quelconque des revendications 1 à 13, **caractérisé en ce que** le levier de commande (16) peut être réglé, par son extrémité détournée du premier levier de réglage (15a), le long d'une broche (18) entraînée en rotation.

15. Dispositif selon la revendication 14, **caractérisé en ce que** le levier de commande (16) est relié de manière flexible à un élément de réglage (19) montant sur la broche (18).

16. Dispositif selon la revendication 15, **caractérisé en ce que** la connexion flexible entre le levier de commande (16) et l'élément de réglage (19) se compose d'un élément flexible (6) en forme de bande.
